# EUROPEAN PATENT APPLICATION

(11) **EP 2 650 634 A1**
(43) Date of publication of application: **16.10.2013**
(21) Application number: 13163485.9
(22) Date of filing: 12.04.2013
(51) Int. Cl.: F28D 9/00, F28F 9/26, B01D 53/26

(54) **Heat exchanger**

(30) Priority: 13.04.2012 IT UD20120060
(71) Applicant: Officine Meccaniche Industriali SRL Con Unico Socio, 34070 Fogliano Redipuglia (GO) (IT)
(72) Inventor: De Piero, Paolo, 33010 Tavagnacco (UD) (IT); Vezil, Stefano, 34149 Trieste (IT); Doddi, Luca, Vito, 20062 Cassano d'Adda (MI) (IT); Capellari, Giovanni Battista, 33100 Udine (IT)
(74) Representative: Petraz, Gilberto Luigi

(57) **Abstract**

A heat exchanger (10, 110, 210) comprises at least a pre-cooling unit, or pre-exchanger (12), having a longitudinal development along at least a first longitudinal axis (L1), and at least a cooling unit, or evaporator (14, 114), having a longitudinal development along at least a second longitudinal axis (L2) and connected to the pre-exchanger (12) in order to define a fluid-dynamic circuit for the circulation of a fluid, such as air (A), in said pre-exchanger (12) and said evaporator (14, 114). The first longitudinal axis (L1) and said second longitudinal axis (L2) are angled with respect to each other by an angle comprised between 45° and 135°.

## Description

### FIELD OF THE INVENTION

The present invention concerns a heat exchanger used in cooling or drying machines and/or plants, such as for example drying plants for compressed air, or in general for applications where de-humidified and almost totally dry compressed air is required.

Apart from in driers for compressed air, the invention is also advantageously applicable in industrial, commercial and residential cooling plants, or any other similar or comparable application.

### BACKGROUND OF THE INVENTION

It is known to produce heat exchangers consisting of a pre-cooling unit, or so-called air-air pre-exchanger, a cooling unit, or so-called cooling air exchanger or evaporator, and a separation unit, to separate from the cooled fluid the condensation that has accumulated due to the cooling. At top and tail of such circuits there are collectors, in turn connected to the entrance and exit of the respective fluids.

The pre-cooling unit and the cooling unit consist of a plurality of known circuits disposed parallel or in layers, made of fins, baffle plates and horizontal walls, of heat-conductive metal material, packed and alternating with each other, in which, respectively, a fluid to be cooled and a cooling fluid flow, according to known techniques, in the same direction, in counter-flow or in crossed flows.

Known heat exchangers, an example of which is described in the patent application EP-1-956-330-A2 in the name of the present Applicant, generally have the pre-heater and evaporator aligned in reciprocal succession. This disposition on the one hand is advantageous because it optimizes the flow of the fluid through the heat exchanger, reducing changes in direction and loss of load. On the other hand however, it has the disadvantage that, if high cooling powers are required, the components have to be very long, and this is harmful for the efficiency of the exchanger itself, and often excessive for the requirements of the plant where they have to be installed.

The machines to which these heat exchangers have to be associated normally have predetermined and particularly compact sizes. Furthermore, the market at present is directed more and more toward the need for considerable cooling power of the plants, but at the same time requires a reduction in costs and bulk of the plants.

In the light of this, many known heat exchangers therefore have the disadvantage that they can be applied only in plants that do not have particularly restrictive geometrical limitations.

Known heat exchangers, of the horizontal or vertical type and with aligned components, also have the disadvantage that they cannot exploit the natural circulation of fluids due to the force of gravity, requiring apparatuses to move the fluids.

Given their particular configuration, these heat exchangers also require suitable means to separate the condensation, such as for example separation baffle plates, to allow a suitable separation of the condensed liquid from the stream in transit through the separation unit.

US-A-1.814.010 discloses a heat-exchanger device having a T-shape with vertical tubes provided for the cooling unit and horizontal tubes provided for the pre-cooling unit, in which the vertical and horizontal tubes are separated by an intermediate plate and connected each other by a couple of ducts having the function of a collector. This arrangement involves complexity of work, less thermal efficiency and a bulky overall structure.

EP-A2-149.466 and DE 10 2010 008383 Al disclose other configurations of heat exchangers with elements angled each other, but also these arrangements have complex and bulky configurations of the connections between the channels of one and the other exchangers.

One purpose of the present invention is to obtain a heat exchanger that is compact, and hence suitable to be installed in machines having limited bulk, while at the same time guaranteeing optimized performance, better than that of known heat exchangers of the same size.

Another purpose of the present invention is to obtain a heat exchanger with limited bulk and weight, which is easy to produce and which allows to reduce the costs of production and installation.

Another purpose of the present invention is to obtain a versatile heat exchanger, the maintenance of which is easy and simpler than that of known heat exchangers.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a heat exchanger according to the present invention comprises at least a pre-cooling unit, or pre-exchanger, having a longitudinal development at least along a first longitudinal axis, and at least a cooling unit, or evaporator, having a longitudinal development along at least a second longitudinal axis.

According to a main characteristic of the present invention, the pre-exchanger and the evaporator are connected with each other to define, inside them, a fluid-dynamic circuit for the circulation of a fluid, such as for example air, and the first longitudinal axis and the second longitudinal axis are angled with respect to each other by an angle comprised between 45° and 135°.

In this way it is possible to obtain a configuration of the exchanger that is more compact at least along the same longitudinal direction. Indeed, the fact that the two axes of longitudinal development are disposed angled and incident with respect to each other allows to reduce the longitudinal bulk compared with known heat exchangers.

Advantageously, to obtain an optimum compactness of the heat exchanger, an embodiment of the present invention provides that the first and second longitudinal axes are orthogonal with respect to each other, that is, angled by 90°.

This disposition allows to house other components between the contiguous parts of the pre-exchanger and evaporator, as will be described hereafter.

Both the pre-exchanger and the evaporator comprise a plurality of channels for the circulation of the fluid, having a main development along the first longitudinal axis and respectively along the second longitudinal axis.

The channels define the fluid-dynamic circuit of the heat exchanger that obtains a method for drying a fluid, such as for example air, according to the present invention.

According to a further main characteristic of the present invention, the channels of the pre-exchanger and the channels of the evaporator are directly connected each other, and are geometrically and dimensionally corresponding each other, so that the outlet of the channels of the pre-exchanger is the inlet of the channels of the evaporator and vice versa.

In this way, both a more compact structure and a better thermal efficiency can be obtained.

According to a secondary characteristic of the present invention, the heat exchanger also comprises a unit to separate the condensation, or separator, associated with the pre-exchanger and evaporator in correspondence with their contiguous peripheral walls, having a box-like shape defined by a casing and comprising an expansion chamber defined in turn by the casing and by the contiguous peripheral walls of the pre-exchanger and evaporator.

In one form of embodiment, the expansion chamber extends from the end where the air exits from the evaporator in a predominant development in a direction substantially parallel to the second longitudinal axis.

In another form of embodiment, the expansion chamber extends from the end where the air exits from the evaporator in a predominant development in a direction substantially parallel to the first longitudinal axis.

In this way, advantageously a reduction is obtained in the bulk of the heat exchanger, given the same sizes of the pre-exchanger and evaporator.

In the expansion chamber the air is expanded and diverted toward the pre-exchanger, with a consequent separation, in the form of condensation, of the humidity contained in the air, and thanks to the conformation and position of the expansion chamber, the advantageous precipitation of the condensation due to gravity. In this way the air is dried better, and continues its travel inside the heat exchanger in a direction opposite that in which the condensation precipitates.

The configuration of the expansion chamber promotes the precipitation of the condensation toward its lower part, since it is advantageous to provide that, in use, the heat exchanger is installed so that its second longitudinal axis is substantially vertical and that the end from which the air exits from the evaporator faces downward.

According to one characteristic of the present invention, the end from which the air exits from the evaporator is configured to make the air exit parallel to the first longitudinal axis.

It comes within the spirit of a variant of the present invention to provide that the end from which the air exits from the evaporator is configured to make the air exit parallel to the second longitudinal axis.

Advantageously, the heat exchanger according to the present invention is provided with a deflecting baffle plate, disposed in correspondence with the end from which the air exits from the evaporator and suitable to define an obligatory path for the air, toward the inside of the expansion chamber. In this way, the possibility of drops of condensation being sucked back inside the pre-exchanger positioned after the expansion chamber is advantageously prevented.

The heat exchanger obtained according to the present invention has the advantage that the deflection of the path of air, and the slowing of the air, combined to obtain a separation effect already inside the expansion chamber, make it unnecessary to instal baffle plates or demister plates to separate the condensation, which are commonly used in known heat exchangers and generally have a honeycomb structure. These baffle plates for separating the condensation would increase the weight, bulk and losses of load that are characteristic of the heat exchanger, therefore their absence brings both economic advantages in terms of production costs, and also technical advantages in terms of reducing the losses of load.

In another form of embodiment of the present invention, a heat exchanger also comprises connection means able to connect, hermetically and removably, at least one of the following pairs: the pre-exchanger with the evaporator, the evaporator with the separator, and the pre-exchanger with the separator, the latter having a closed box-like shape defined by a hollow body that delimits an expansion chamber.

In this way, the maintenance of the heat exchanger is easy, because it may only involve one of its components, without needing to remove or replace the whole heat exchanger in the event of breakdowns, malfunctions or simple controls.

The present invention also concerns a method for drying a fluid, such as air, with a heat exchanger as described above.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a first three-dimensional view, partly in section, of a heat exchanger according to the present invention;
- fig. 2 is a second three-dimensional view, partly in section, of the exchanger in fig. 1;
- fig. 3 is an enlarged three-dimensional view of detail C in fig. 1;
- fig. 4 is a three-dimensional view, partly broken, of an embodiment of a heat-exchanger according to the present invention;
- fig. 4a is an enlarged detail of fig. 4;
- fig. 5 is a further enlarged detail of the main components of the heat-exchanger of fig. 4 in a disassembled state;
- fig. 6 is a first variant of fig. 1;
- fig. 7 is a second variant of fig. 1;
- fig. 8 is a three-dimensional and exploded view of a third variant of fig. 1;
- fig. 9 is a front view of the heat exchanger in fig. 6, assembled.

In the following description, the same reference numbers identify identical parts of the heat exchanger according to the present invention, even in different forms of embodiment. It is understood that elements and characteristics of one form of embodiment can conveniently be incorporated into other forms of embodiment without further clarifications.

### DETAILED DESCRIPTION OF SOME FORMS OF EMBODIMENT

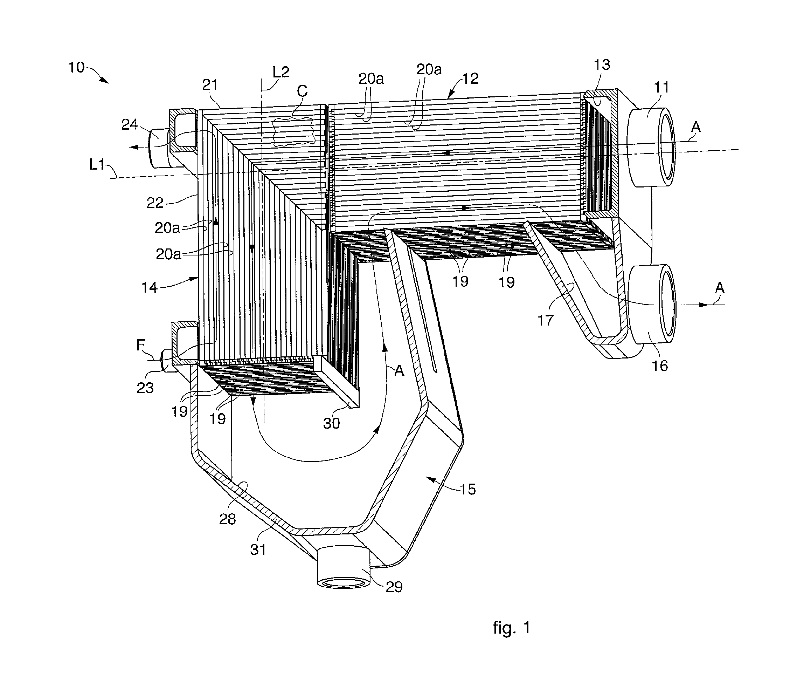

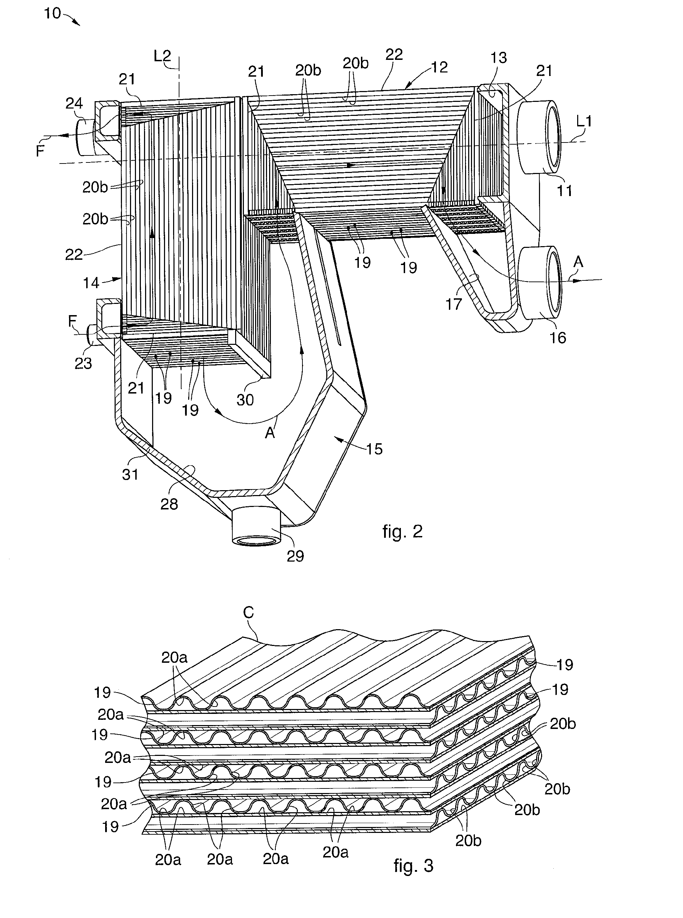

With reference to figs. 1 and 2, a heat exchanger 10 according to the present invention is suitable to allow the exchange of heat between a stream of hot fluid, in this case air A, to be cooled, and a stream of cooling fluid, in this case freon F.

The heat exchanger 10 comprises a pre-cooling unit, or pre-exchanger 12, a cooling unit or evaporator 14, and a unit to separate the condensation, or separator 15.

In use, the heat exchanger 10 is positioned so that the pre-exchanger 12 and the evaporator 14 are disposed above the separator 15 and that the air A and the freon F enter and exit laterally from the heat exchanger 10.

The path of air A inside the heat exchanger 10 is shown in figs. 1 and 2, and is articulated as described hereafter.

Hot air A enters the exchanger 10 from an entrance pipe 11 positioned at one end of the pre-exchanger 12, and is distributed uniformly over the whole height of the latter by an entrance collector 13, so that the largest heat exchange surface possible is involved. The air A passes through the pre-exchanger 12 and gives up part of its heat to the air A exiting, which flows inside the pre-exchanger 12 in counter-flow with respect to the air A entering. Afterward, the pre-cooled air A enters the evaporator 14 and passes through it in counter-flow with respect to the freon F, which cools it and evaporates due to the effect of the heat given to it by air A. Downstream of the evaporator 14, the cooled air A transits in the separator 15 which is configured to determine an expansion of the air A and to deflect it again toward the pre-exchanger 12. The air A passes through the pre-exchanger 12 according to the path previously described, and then exits from the heat exchanger 10, cooled and dried, through an exit pipe 16, disposed downstream of an exit collector 17 in proximity to the entrance pipe 11, below it and on the same side as the pre-exchanger 12.

The pre-exchanger 12 and the evaporator 14 both comprise a heat exchange body, shaped like an elongated parallelepiped and in which respectively a first longitudinal axis L1 and a second longitudinal axis L2 identify the main dimension thereof. To confer overall compactness on the heat exchanger 10, the first and second longitudinal axes L1 and L2 are inclined with respect to each other by an angle comprised between 45° and 135°, and in this case are orthogonal, i.e. define each other an angle of 90°, so that the space saved is maximum, given the same sizes of the pre-exchanger 12, the evaporator 14 and the separator 15.

The pre-exchanger 12 and the evaporator 14 are both the plate type, consisting of a plurality of sheets of shaped metal, or plates 19 (fig. 3), with an undulating profile and overlapping each other in a packed disposition, or wafer. The purpose of the packing is to define a plurality of first channels 20a and second channels 20b lying on reciprocally parallel and alternate planes. The first channels 20a are suitable to contain a first fluid and to convey it along an obligatory path, while the second channels 20b are suitable to contain and convey a second fluid. The first and second fluids are fluidically isolated from each other, and the heat exchange takes place by conduction between the plates 19 defining the first and second channels 20a and 20b.

The channels 20a and 20b of the pre-exchanger are oriented parallel to the first longitudinal axis L1, while those of the evaporator 14 are oriented parallel to the second longitudinal axis L2.

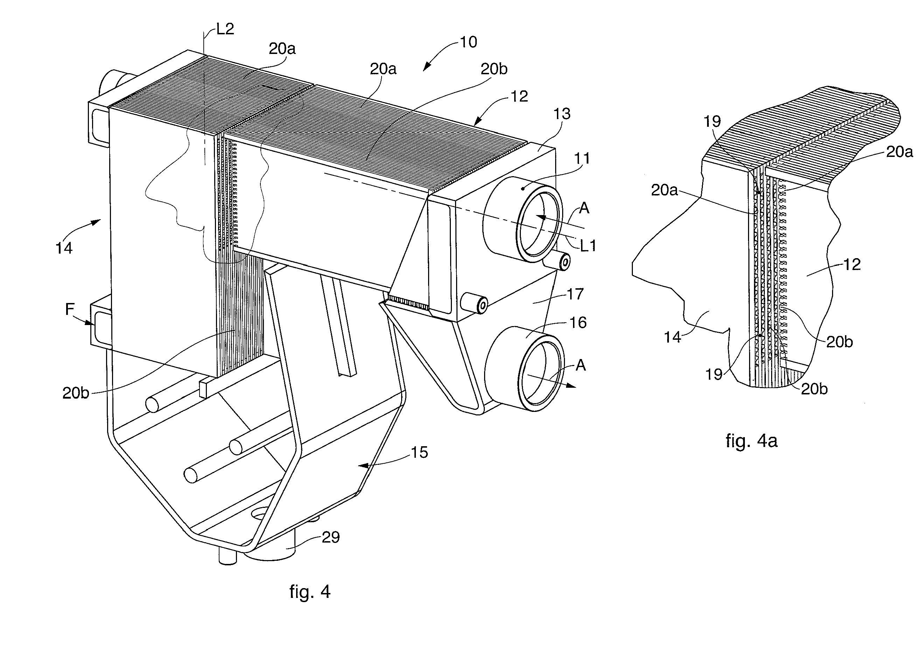

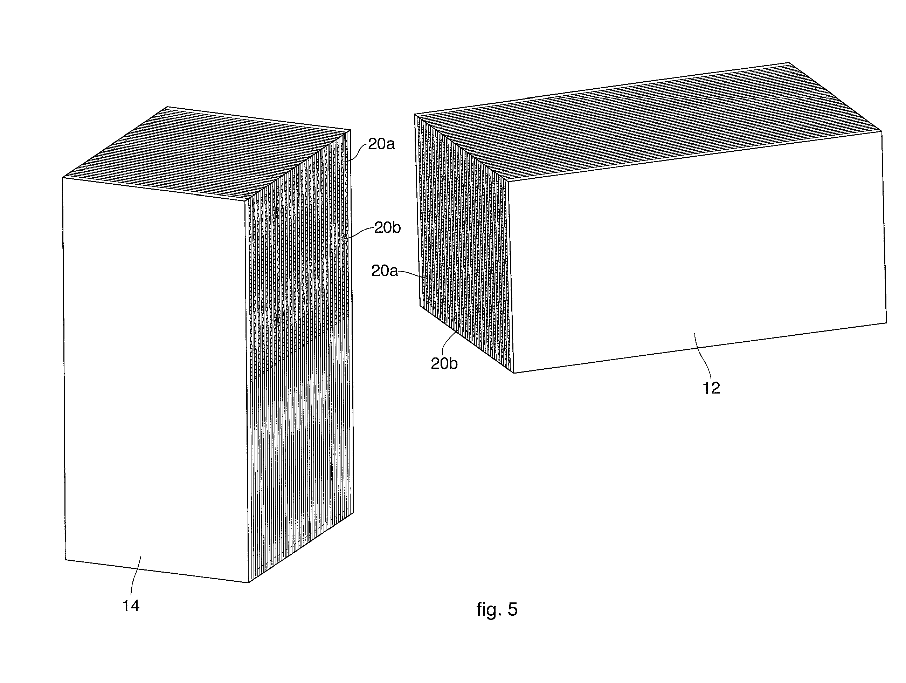

As better disclosed in the details of figures 4, 4a and 5, the channels 20a, 20b of the pre-exchanger 12 and the channels 20a, 20b of the evaporator 14, 114 are directly connected each other, and are geometrically and dimensionally corresponding each other, so that the outlet of the channels of the pre-exchanger 12 is the inlet of the channels of the evaporator 14, 114 and vice versa.

Fig. 1 shows the path of the first passage of air A in the pre-exchanger 12, and the path of air A in the evaporator 14 and separator 15, while fig. 2 shows the path of the second passage of air A in the pre-exchanger 12, and the path of the freon F in the evaporator 14.

Means to divert the flow are provided with every change of direction of the fluid and, in this case, comprise triangular sectors 21 of the plates 19, packed in the same way as described above and also defining first channels 20a and second channels 20b lying on parallel and alternate planes.

Each of the triangular sectors 21 is fluidically connected to trapezoid sectors 22, also having the same configuration of the packed plates 19 to define the first channels 20a and second channels 20b of the pre-exchanger 12 and evaporator 14. The channels 20a and 20b of each plate 19 of every triangular sector 21 are in direct fluidic communication, along the hypotenuse of the latter, with the channels 20a and 20b of each plate 19 of every corresponding adjacent trapezoid sector 22.

In this case (fig. 1), in the evaporator 14, the path of air A is defined by a triangular sector 21 disposed communicating with the pre-exchanger 12 and a trapezoid sector 22, having the shape of a rectangular trapezoid.

Furthermore, triangular sectors 21 (fig. 2) are disposed at the two ends of the pre-exchanger 12 in order to divert the air A from the separator 15 along the first longitudinal axis L1 and from the latter to the exit pipe 16. In the evaporator 14, the path of the freon F is subjected to two diversions, at entrance and at exit, and therefore there are two triangular sectors 21 at the ends of the evaporator 14, in correspondence with an entrance pipe 23 and an exit pipe 24, and a central trapezoid sector 22.

The separator 15 has a box-like shape, elongated vertically along the second longitudinal axis L2, defined by a casing 31, substantially U-shaped and associated with the pre-exchanger 12 and evaporator 14 in correspondence with their contiguous peripheral walls. The casing 31 and the peripheral walls of the pre-exchanger 12 and evaporator 14 define an expansion chamber 28 that extends inside the casing 31 below the evaporator 14, that is, in correspondence with the exit end of the air A, and below part of the pre-exchanger 12, that is, in the zone comprised between the contiguous walls and the casing 31. The air A arriving from the evaporator 14 expands in the expansion chamber 28 and is diverted toward the pre-exchanger 12. The expansion of the air A determines the separation of the humidity contained therein in the form of condensation which precipitates due to gravity onto the bottom of the separator 15, toward a discharge pipe 29 through which it exits from the heat exchanger 10.

A deflecting baffle plate 30 is disposed in correspondence with the end from which the air A exits from the evaporator 14 and in correspondence with its peripheral wall facing the expansion chamber 28. The baffle plate 30 extends substantially parallel to the peripheral wall and prevents drops of condensation from being sucked up at exit from the evaporator 14 during the ascending flow of the air A.

Inside the separator 15, the air A is subjected to slowing, expansion and sudden diversion in its path, which makes it unnecessary to use condensation separation baffle plates, or demister baffle plates, which are commonly used in known heat exchangers and have a generally honeycomb structure. The fact that these components are not used in the heat exchanger 10 gives a considerable advantage from the perspective of reducing weight and bulk, and also an advantage in terms of reducing overall losses in load, with consequent technical and economic benefits on the level of the plant.

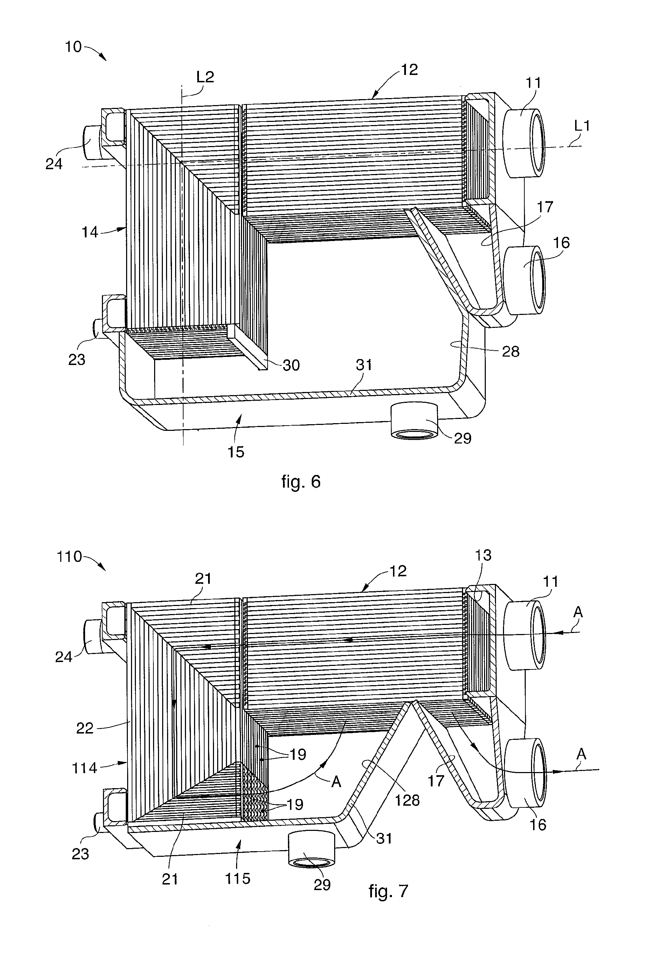

In a first variant (fig. 6), made with the purpose of further reducing the bulk of the heat exchanger 10, the separator 15 is made so as to have a mainly horizontal development, that is, along the first longitudinal axis L1, unlike the vertical development along the second longitudinal axis L2 of the separator 15 previously described. In this way, the expansion chamber 28 develops mainly laterally to the evaporator 14 and below the pre-exchanger 12.

In this way the heat exchanger 10 has a reduced height, without compromising its efficiency.

According to another variant (fig. 7), the air A is diverted twice inside the evaporator 114, which therefore, with regard to the path of air A, consists of plates 19 defining two triangular sectors 21 between which a central trapezoid sector 22 is interposed, connected to them. In this variant, the expansion chamber 128 of the separator 115 is positioned entirely at the side of the evaporator 114 and below the pre-exchanger 12, for almost the whole longitudinal extension of the latter.

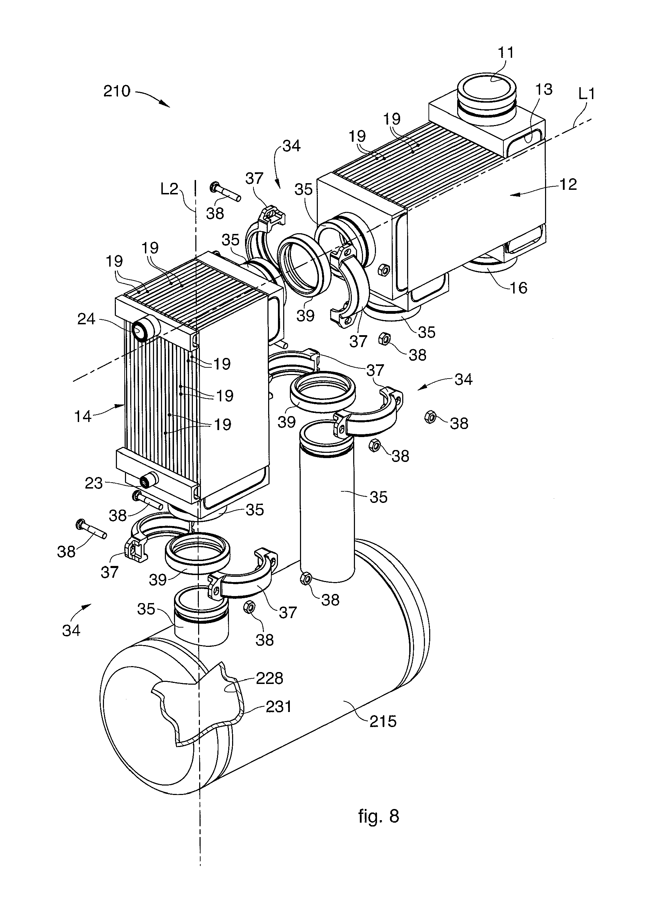

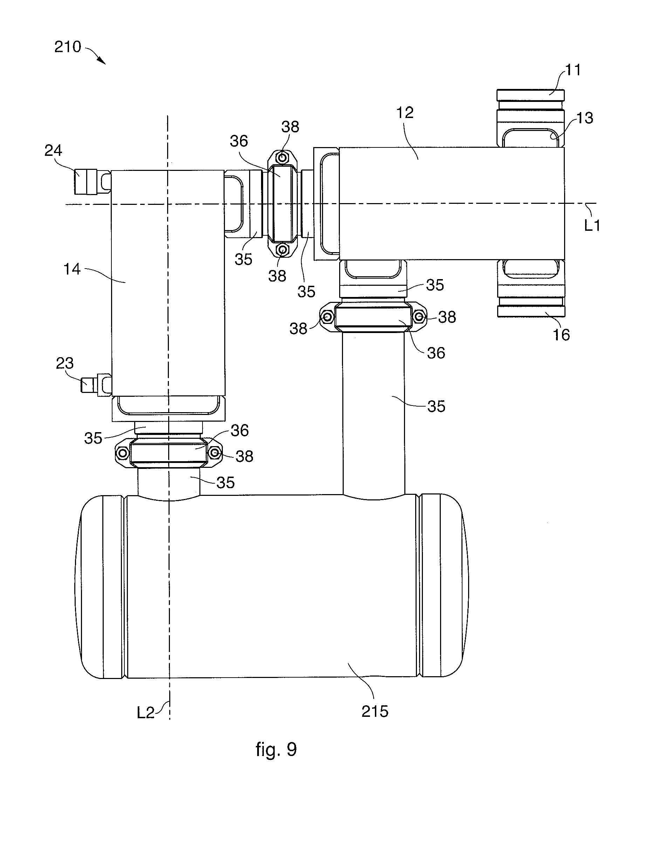

With reference to figs. 8 and 9, another variant of the heat exchanger according to the present invention, indicated by the reference number 210, comprises a separator 215 having a cylindrical shape, hollow inside and defined by a hollow body 231 that delimits the expansion chamber 28.

In this variant, the pre-exchanger 12, the evaporator 14 and the separator 215 are not welded together, as in the variants described above, but are connected removably. To this purpose, connection means 34 are provided between the pre-exchanger 12 and the evaporator 14, between the latter and the separator 215 and between the separator 215 and the pre-exchanger 12. In this case, by way of example, connection means 34 are shown which comprise, for each connection, a connection pipe 35 which is connected to the corresponding connection pipe 35 of the component to be connected by means of a closing flange 36, consisting of two semi-shells 37 reciprocally attached by means of attachment bolts 38. A sealing element 39, interposed between the two connection pipes 35 of each connection and inside the closing flange 36, allows the hermetic connection of each component. In this way, all the components of the heat exchanger 210 are removable, conferring on the latter the important characteristic of being modular and hence versatile.

In this form of embodiment, unlike in the previous ones, the entrance collector 13 is positioned on the top of the pre-exchanger 12, while the exit pipe is positioned in the lower part of the pre-exchanger 12. In this way, the air A enters into the pre-exchanger 12 at the top and exits from the bottom, instead of laterally, as in the previous forms of embodiment.

It is clear that modifications and/or additions of parts may be made to the heat exchanger as described heretofore, without departing from the field and scope of the present invention.

It is also clear that, although the present invention has been described with reference to some specific examples, a person of skill in the art shall certainly be able to achieve many other equivalent forms of heat exchanger, having the characteristics as set forth in the claims and hence all coming within the field of protection defined thereby.

## Claims

1. Heat exchanger comprising at least a pre-cooling unit, or pre-exchanger (12), having a longitudinal development along at least a first longitudinal axis (L1), and at least a cooling unit, or evaporator (14, 114), having a longitudinal development along at least a second longitudinal axis (L2) and connected to said pre-exchanger (12) in order to define, in said pre-exchanger (12) and said evaporator (14, 114), a fluid-dynamic circuit for the circulation of a fluid, such as air (A), wherein said fluid-dynamic circuit comprises first (20a) and second (20b) channels for the circulation of a respective first and second fluid, wherein the circulation channels (20a, 20b) of the pre-exchanger (12) have a main development along said first longitudinal axis (L1) and the circulation channels (20a, 20b) of the evaporator (14, 114) have a main development along said second longitudinal axis (L2), **characterized in that** said first longitudinal axis (L1) and said second longitudinal axis (L2) are angled with respect to each other by an angle comprised between 45° and 135°, wherein the channels (20a, 20b) of the pre-exchanger (12) and the channels (20a, 20b) of the evaporator (14, 114) are directly connected each other, and are geometrically and dimensionally corresponding each other, so that the outlet of the channels of the pre-exchanger (12) is the inlet of the channels of the evaporator (14, 114) and vice versa.

2. Heat exchanger as in claim 1, **characterized in that** said first longitudinal axis (L1) and said second longitudinal axis (L2) are orthogonal with respect to each other.

3. Heat exchanger as in claim 1 or 2, also comprising a condensation separation unit, or separator (15, 115), associated to said pre-exchanger (12) and to said evaporator (14) in correspondence to their contiguous peripheral walls, **characterized in that** said separator (15, 115) has a box-like shape defined by a casing (31) and comprises an expansion chamber (28, 128) defined in turn by said casing (31) and by said contiguous peripheral walls of said pre-exchanger (12) and said evaporator (14).

4. Heat exchanger as in claim 3, **characterized in that** said expansion chamber (28) extends from the end where said air (A) exits from said evaporator (14) according to a predominant development in a direction substantially parallel to said second longitudinal axis (L2).

5. Heat exchanger as in claim 3, **characterized in that** said expansion chamber (128) extends from the end where said air (A) exits from said evaporator (14) according to a predominant development in a direction substantially parallel to said first longitudinal axis (L1).

6. Heat exchanger as in claim 4 or 5, **characterized in that** said end where said air (A) exits from said evaporator (14) is configured to make said air (A) exit parallel to said first longitudinal axis (L1).

7. Heat exchanger as in claim 4 or 5, **characterized in that** said end where said air (A) exits from said evaporator (14) is configured to make said air (A) exit parallel to said second longitudinal axis (L2).

8. Heat exchanger as in any claim from 4 to 7, **characterized in that** said evaporator (14) is provided with a deflecting baffle plate (30) disposed in correspondence to said end where said air (A) exits from said evaporator (14) and suitable to define an obligatory path for said air (A).

9. Heat exchanger as in claim 1 or 2, also comprising a condensation separation unit, or separator (15), **characterized in that** it also comprises connection means (34) able to connect, hermetically and removably, at least one of the following pairs: said pre-exchanger (12) with said evaporator (14), said evaporator (14) with said separator (15), and said pre-exchanger (12) with said separator (15), the latter having a closed box-like shape defined by a hollow body (231) which delimits an expansion chamber (228).

10. Method for drying a fluid, such as air (A), which provides that said air (A) is made to circulate in a fluid-dynamic circuit of a heat exchanger (10, 110, 210) as in any claim hereinbefore at least inside a pre-cooling unit, or pre-exchanger (12) and then inside a cooling unit, or evaporator (14, 114), **characterized in that** said air (A) flows in said pre-exchanger (12) mainly in a direction parallel to a first longitudinal axis of development (L1) of the latter, and in said evaporator (14) mainly in a direction parallel to a second longitudinal axis of development (L2) of the latter, said first longitudinal axis (L1) and said second longitudinal axis (L2) being angled, with respect to each other, by an angle comprised between 45° and 135°, preferably about 90°.
